(19) Europäisches Patentamt

European Patent Office

Office européen des brevets

(11) Publication number: **0 354 802 B1**

(12) **EUROPEAN PATENT SPECIFICATION**

(45) Date of publication of patent specification: **14.07.93**

(21) Application number: **89308170.3**

(22) Date of filing: **11.08.89**

(51) Int. Cl.⁵: **C08L 59/02**, //C08J5/16,
C08K5/05,C08K5/09,C08K5/10,
(C08L59/02,51:06)

(54) **Polyacetal resin composition and sliding member.**

(30) Priority: **12.08.88 JP 201286/88**

(43) Date of publication of application:
**14.02.90 Bulletin 90/07**

(45) Publication of the grant of the patent:
**14.07.93 Bulletin 93/28**

(84) Designated Contracting States:
**AT BE CH DE ES FR GB GR IT LI LU NL SE**

(56) References cited:
**GB-A- 1 488 408**
**US-A- 4 041 002**
**US-A- 4 556 690**

(73) Proprietor: **POLYPLASTICS CO. LTD.**
**3-13, Azuchicho, 2-chome**
**Chuo-Ku Osaka-shi Osaka 541(JP)**

(72) Inventor: **Endo, Toshihiko**
**324 Miyashita Fuji-shi**
**Shizuoka(JP)**
Inventor: **Kanoto, Osamu**
**885-11 Miyajima Fuji-shi**
**Shizuoka(JP)**
Inventor: **Matsunaga, Nobuyuki**
**104 Kamiyokowari Fuji-shi**
**Shizuoka(JP)**

(74) Representative: **Jackson, Peter et al**
**HYDE, HEIDE & O'DONNELL 10-12 Priests**
**Bridge**
**London SW15 5JE (GB)**

EP 0 354 802 B1

**Description**

The present invention relates to a polyacetal resin composition having excellent friction and abrasion resistances and free from squeaking when it slides.

The polyacetal resins are widely used in the fields of automobiles and electric and electronic appliances, since they have well-balanced mechanical properties and excellent friction resistance, abrasion resistance, chemical resistance, heat resistance and electrical properties. However, more improved properties are now required of them in these fields. For instance, a further improvement in or relating to the sliding characteristics in addition to general physical properties is demanded. The sliding characteristics include the coefficient of friction and specific abrasion loss as a matter of course and, in addition, squeaking caused by the sliding as an important factor.

To improve the sliding characteristics including the squeaking of the polyacetal resin, a resin such as a fluororesin or a polyolefin resin or a lubricating oil such as a fatty acid, fatty acid ester, silicone oil or mineral oil is added to the polyacetal resin.

Although the fluororesin or polyolefin resin added to the polyacetal resin is capable of improving the sliding characteristics including the squeaking to some extent, it frequently causes a peeling on the surface of the formed molding or forms a deposit on a mold used for the molding, since it has only a poor compatibility with the polyacetal resin.

Although the addition of the lubricating oil is effective in reducing the coefficient of friction and the specific abrasion loss, it is yet ineffective in eliminating the squeaking caused by the sliding. Further the addition of the lubricating oil has problems such as difficulty of extrusion and molding and bleeding during the use.

US Patent 4,556,690 proposes an acetal resin composition comprising (A) an acetal resin and (B) 1 to 200 parts by weight, per 100 parts by weight of the acetal resin (A), of at least one modified alpha-olefin polymer, said modified alpha-olefin polymer (B) being a graft co-polymerization product of 100 parts by weight of an alpha-olefin polymer and 0.01 to 10 parts by weight of an unsaturated carboxylic acid or its derivative, in order to provide a resin composition stated to have excellent rigidity, flexural strength, impact strength, heat resistance and moldability and being free from delamination. That patent, however, does not address the specific practical problem of the sliding characteristics of the resin, in particular the problem of squeak.

Thus, while some known processes give acceptable moldability and certain other practical properties, they remain unsatisfactory from the viewpoint of the sliding characteristics. Under these circumstances, the developments of materials having improved properties is demanded.

After intensive investigations made for the purpose of developing a polyacetal resin composition having excellent general physical properties and particularly excellent sliding characteristics, the inventors have found that a polyacetal resin composition having a remarkably lowered sliding noise (squeak) and excellent friction and abrasion resistances, moldability and other general physical properties can be obtained when a specified graft copolymer is added to the polyacetal resin. The present invention has been completed on the basis of this finding.

The present invention provides a polyacetal resin composition comprising:
(A) 100 parts by weight of a polyacetal resin and
(B) 0.5 to 40 parts by weight of a graft copolymer which comprises (a) an olefinic polymer chemically bonded to (b) one or more of vinyl polymers or ether polymers selected from the group consisting of polymethyl methacrylate, acrylonitrile/styrene copolymer and polyethylene oxide to form a branched or crosslinked structure.

The invention further provides a polyacetal resin composition comprising the above-described basic constituents and, as desired
(C) 0.1 to 20 parts by weight of a lubricant for 100 parts by weight of the total of A and B.

Polyacetal resin compositions as defined in the preceding two paragraphs have remarkably improved friction and abrasion resistances, particularly a reduced squeak.

The invention further includes sliding members comprising such compositions.

Now the detailed description will be made on the construction of the present invention.

The polyacetal resin (A) usable in the present invention is either a polyacetal homopolymer or a polyacetal copolymer in which the main chain mostly comprises an oxymethylene chain. Further the polyacetal modified by crosslinking or graft copolymerization by a known process can also be used as the base resin. The degree of the polymerization of the polyacetal resin (A) is not particularly limited so far as the resin can be molded.

2

The component (B) usable in the present invention is a graft copolymer which comprises (a) an olefinic polymer chemically bonded to (b) one or more vinyl polymers or ether polymers to form a branched or crosslinked structure.

The olefinic polymers (a) consituting the main chain of the graft copolymer (B) include homopolymers such as polyethylene, polypropylene and polybutene as well as copolymers mainly comprising them. The copolymers include, for example, ethylene/propylene copolymer, ethylene/1-butene copolymer and copolymers of ethylene with a glycidyl ester of an $\alpha,\beta$-unsaturated acid (such as glycidyl acrylate, glycidyl methacrylate or glycidyl ethacrylate). Among them, polyethylene and a copolymer of ethylene and glycidyl ester of an alpha, beta-unsaturated acid, especially a copolymer of ethylene and glycidyl methacrylate.

It is preferable that said graft copolymer (B) is a graft copolymer produced by grafting polymethylmethacrylate or a copolymer of acrylonitrile and styrene on polyethylene.

The graft copolymer (B) featuring the present invention is characterized in that the above-described olefinic polymer (a) and vinyl polymer or ether polymer (b) constituting the main chain of the copolymer (B) are used not singly but the polymers (a) and (b) having properties different from each other are chemically bonded in at least one portion to form a branched or crosslinked structure. By virtue of such a graft structure, remarkable effects which cannot be obtained by the mere incorporation of the polymer (a) or (b) can be obtained as will be described below.

Processes for producing the graft copolymer comprising the segment (a) and segment (b) are not particularly limited. It can be easily produced by a well known radical reaction. The graft copolymer (B) is produced by, for example, a process wherein the polymer (a) and a monomer for (b) are melt-kneaded altogether with a radical catalyst and the mixture is graft-polymerized. Alternatively a radical catalyst such as a peroxide is added to either (a) or (b) to form free radicals and then the mixture is kneaded with another polymer to produce (B). A weight ratio of (a) to (b) ranges 95:5 to 5:95, preferably 80:20 to 20:80, more preferably 60:40 to 40:60.

The amount of the component (B) is 0.5 to 40 parts by weight, preferably 1 to 30 parts by weight, for 100 parts by weight of the component (A).

When the amount of the component (B) is insufficient, no intended effect of the present invention of improving the sliding characteristics, particularly reducing the squeak can be obtained and, on the contrary, when it is excessive, the mechanical properties such as rigidity are impaired.

Although the composition per se of the present invention has excellent physical properties, particularly sliding characteristics and moldability, the effects thereof can be further improved by adding the lubricant (C) to the above-described components (A) and (B).

The lubricants (C) include, for example, mineral oils such as spindle oil, refrigerator oil, turbine oil, machine oil, cylinder oil and gear oil; hydrocarbons such as liquid paraffin, paraffin wax and polyethylene wax; fatty acids such as lauric acid, myristic acid, palmitic acid, stearic acid, arachidic acid, behenic acid and montanic acid, alcohols such as hexyl alcohol, octyl alcohol, cetyl alcohol, stearyl alcohol, behenyl alcohol, glycols, glycerin, polyglycerol and pentaerythritol, aliphatic ester of the above aliphatic acid and the above shown alcohols, such as stearyl stearate, behenyl behenate, pentaerythritol tristearate, pentaerythritol tetrastearate, glycerin monostearate and glycerin monobehenate, fatty acid amides such as stearamide, palmitamide, oleamide, methylenebisstearamide and ethylenebisstearamide; esters such as butyl stearate, hardened castor oil and ethylene glycol monostearate; alcohols such as cetyl alcohol, stearyl alcohol, ethylene glycol and polyglycerol; metallic soaps such as calcium stearate, zinc stearate and magnesium stearate: natural waxes such as montan wax; and silicone. The lubricants (C) are thus selected from among various materials in a wide range.

Among the lubricants, an aliphatic acid, an alcohol and an aliphatic acid ester, each having at least 12 carbon atoms are preferable in view of easiness to treat it, processing, abrasion resistance and other mechanical properties. Most preferable is an aliphatic ester having at least 20 carbon atoms.

The amount of the lubricant used in the present invention is 0.1 to 20 parts by weight for 100 parts by weight of the total of components (A) and (B). When it is less than 0.1 part by weight, no essential effect of the lubricant can be sufficiently exhibited and, on the other hand, when it exceeds 20 parts by weight, the properties of the polyacetal base are impaired.

The further characteristic feature and the effect of the present invention are that the squeak caused by the sliding is reduced remarkably and the friction and abrasion resistances are remarkably improved by adding the specified graft copolymer (B) to the polyacetal (A). Moreover incorporation of (B) and (C) into the composition provides a synergestic effect in view of the sliding property and other mechanical properties. Because (B) serves as a carrier for (C) to make (C) more compatible with (A). The lubricating agent such as mineral oils and fatty acid esters are usually used for improving the sliding characteristics. However, the sole use of such a lubricating agent causes troubles such as a difficulty in homogeneously adding the lubricating agent in an amount sufficient for obtaining the necessary sliding characteristics, occurrence of slip of the resin on the screw of the extruder during the kneading of the additives, occurrence of surging, and vent up of an unmolten resin through a vent hole to make the preparation of the homogeneous composition per se difficult. In addition, problems such as an insufficient bite and unsatisfactory plasticization are posed in the molding step. Particularly during the use, a large amount of the lubricating agent bleeds out on the surface of the molding.

When the graft copolymer (B) is used together, the above-described defects observed when the lubricating agent is used alone can be overcome. Moreover, the combination of the graft copolymer (B) with the lubricating agent (C) exhibits a remarkable synergistic effect on the sliding characteristics. The effect is available in particular with an ethylene copolymer for (B) and an aliphatic acid, an alcohol or an aliphatic acid ester for (C).

The stability of the composition of the present invention can be further increased with various known stabilizers. Further various knwon additives can be added thereto in order to modify the physical properties thereof depending on the intended use thereof.

The additives include, for example, colorants, releasing agents (other than the above-described lubricants), nucleating agents, antistatic agents, other surfactants, and polymers (other than the above-described graft copolymers).

One or a mixture of two or more of inorganic, organic or metallic fillers in fibrous, powdery or platy form can be used so far as the intended effect of the composition is not seriously impaired.

The composition of the present invention can be easily produced by an ordinarily employed, known process for producing resin compositions. The production processes include, for example, a process wherein the components are mixed together and the mixture is kneaded and extruded with a single- or double-screw extruder to form pellets and a process wherein different kinds of pellets (master batches) are produced and then predetermined amounts of the pellets are mixed together (diluted).

In the production of the composition, it is preferred for increasing the dispersibility of the additives that a part or the whole of the base component, i.e., the polyacetal resin (A) or graft copolymer (B) is pulverized and mixed with other components and the mixture is extruded.

When the lubricant, for example a liquid, is used, it may be in advance mixed with a graft copolymer (B) to effect impregnation, followed by kneading the mixture with the polyacetal resin and extruding the mixture. By this process, the composition can be easily produced and the processability and the sliding properties are improved.

The polyacetal resin composition and Examples that the polyacetal resin composition of the present invention comprising the polyacetal resin (A) containing the spacified graft copolymer (B) and, if desired, the lubricant (C) has remarkably improved sliding characteristics, particularly, noise caused by sliding (squeaking) which are far superior to those of the polyacetal resin containing either the olefinic polymer (a) or the vinyl polymer or ether polymer (b) which is the constituent of the graft copolymer, or containing the lubricating oil (C) used heretofore for the same purpose. Thus the polyacetal resin composition of the present invention can be preferably used as a material for sliding members.

With the composition of the present invention, the defects of such a material in the extrusion and molding process in the prior art can be overcome and, in addition, problems such as the separation of the components and bleeding are solved.

The composition of the present invention usable as the material for the sliding members as described above is suitably used for the production of sliding members for parts of audios, 8 mm video and videos, such as gear, cam, lever, clutch, guide roler and guide pole, and then a counter member to the sliding member such as chassis and plate. Further it is usable also as a material for mechanism parts of textile production machines, cameras, radios, and office automation devices such as facsimiles and computers.

[Examples]

The following Examples will further illustrate the present invention, which by no means limit the invention.

Examples 1 to 21 and Comparative Examples 1 to 26

A polyacetal resin (trade mark: Duracon; a product of Polyplastics Co., Ltd.) as the component (A), a graft copolymer as the component (B) and a lubricant as the component (C) were mixed together in a ratio shown in Tables 1 and 2. The mixture was melt-kneaded with a double-screw extruder to form a composition in pellet form. The pellets were injection-molded to form test pieces, which were evaluated to obtain the results shown in Tables 1 and 2.

For comparison, a composition containing no graft copolymer as the component (B), a composition containing the component (a) or (b) solely in place of the component (B), a composition containing the lubricating agent solely and a composition containing either component (a) or (b) in combination with the lubricant were produced and evaluated in the same manner as that described above. The results are summarized in Tables 1 and 2.

The items and methods of the evaluation will now be described.

Extrudability (observation at the production step of the composition pellets):

The extrusion was conducted with a double-screw extruder having an inner diameter of 30 mm and a vent to observe the extrusion behavior of the samples. In particular, the bite of the screw, vent up, foaming of the strands and surging during extrusion were examined by visual inspection and the results were evaluated in five grades collectively:

```
5——————————4——————————3——————————2——————————1
                        bite of screw
 (good)                  surging                        (bad)
   none ←——————————— vent up ———————————→ serious
                    strand breakage
```

Surface conditions of moldings:

Test pieces for the evaluation (50 mm x 50 mm x 1 mm, center pin gate type) were prepared by molding and the surface peeling of them were evaluated in five grades:

```
5——————————4——————————3——————————2——————————1
 (good)                                                 (bad)
    none ←——————————— peeling ———————————→ serious
```

Squeaking:

The same materials were slidden together by means of a Suzuki friction/abrasion tester under conditions comprising a pressure of 3.5 kg/cm$^2$, linear velocity of 50 mm/sec, contact area of 2.0 cm$^2$ and sliding time of 10 h. The relative volume of the squeak was examined with a noise meter.

```
5——————————4——————————3——————————2——————————1
 (good) ←——— initiation of squeaking ———→ (bad)
 (none)                                         (rapid)
   low          volume of squeaking            high
```

Coefficient of friction and specific abrasion wear:

The coefficient of dynamic friction and the specific abrasion wear were determined by using a usual polyacetal resin (sold under the Trade Mark: Duracon; a product of Polyplastics Co. Ltd.) as the mating member with a Suzuki friction/abrasion tester at a linear velocity of 150 mm/sec under a pressure of 0.6 kg/cm$^2$, the contact area being 2.0 cm$^2$.

The components (B) and the constituents (a) and (b) thereof were as described below. They are represented by the following symbols in Tables 1 and 2:

(a)

| PE: | polyethylene |
|---|---|
| E/GMA: | ethylene/glycidyl methacrylate (85/15) copolymer |

(b)

| PMMA | : polymethyl methacrylate |
|---|---|
| AN/S: | acrylonitrile/styrene copolymer |
| PEO: | polyethylene oxide |

(B)

| PE-g-PMMA: | PE(50)/polymethyl methacrylate(50) graft copolymer |
|---|---|
| PE-g-AN/S: | graft copolymer of PE(50) with acrylonitrile/styrene copolymer (50) |
| PE-g-PEO: | graft copolymer of PE(50) with polyethylene oxide (50) |
| E/GMA-g-PMMA: | graft copolymer of E/GMA (70) with polymethyl methacrylate (30) |
| E/GMA-g-AN/S: | graft copolymer of E/GMA (70) with acrylonitrile/styrene copolymer (30) |

Table 1

| | | | Example | | | | | | | |
|---|---|---|---|---|---|---|---|---|---|---|
| | | | 1 | 2 | 3 | 4 | 5 | 6 | 7 | 8 |
| (A) | | Polyacetal resin (pts. by wt.) | 98 | 95 | 90 | 95 | 95 | 95 | 90 | 95 |
| (B) | | PE−g−PMMA ( " ) | 2 | 5 | 10 | — | — | — | — | — |
| | | PE−g−AN/S ( " ) | — | — | — | 5 | — | — | — | — |
| | | PE−g−PEO ( " ) | — | — | — | — | 5 | — | — | — |
| | | E/GMA−g−PMMA ( " ) | — | — | — | — | — | 5 | 10 | — |
| | | E/GMA−g−AN/S ( " ) | — | — | — | — | — | — | — | 5 |
| (a) | | PE ( " ) | — | — | — | — | — | — | — | — |
| | | E/GMA ( " ) | — | — | — | — | — | — | — | — |
| (b) | | PMMA ( " ) | — | — | — | — | — | — | — | — |
| | | AN/S ( " ) | — | — | — | — | — | — | — | — |
| | | PEO ( " ) | — | — | — | — | — | — | — | — |
| Evaluation | extrudability | | 5 | 5 | 5 | 5 | 5 | 5 | 5 | 5 |
| | surface condition of molding | | 5 | 5 | 5 | 5 | 5 | 5 | 5 | 5 |
| | sliding noise (squeak) | | 4 | 4 | 5 | 4 | 5 | 4 | 5 | 4 |
| | friction/ abrasion character | coefficient of dynamic friction | 0.23 | 0.23 | 0.22 | 0.23 | 0.21 | 0.23 | 0.22 | 0.23 |
| | | specific abrasion wear — composition of the present invention ($mm^3kg \cdot km$) | $8 \times 10^{-2}$ | $6 \times 10^{-2}$ | $5 \times 10^{-2}$ | $6 \times 10^{-2}$ | $5 \times 10^{-2}$ | $8 \times 10^{-2}$ | $6 \times 10^{-2}$ | $8 \times 10^{-2}$ |
| | | mating material ($mm^3kg \cdot km$) | $10 \times 10^{-2}$ | $9 \times 10^{-2}$ | $8 \times 10^{-2}$ | $8 \times 10^{-2}$ | $6 \times 10^{-2}$ | $8 \times 10^{-2}$ | $7 \times 10^{-2}$ | $8 \times 10^{-2}$ |

EP 0 354 802 B1

Table 1    (continued)

| | | | Comparative Example | | | | | | | |
|---|---|---|---|---|---|---|---|---|---|---|
| | | | 1 | 2 | 3 | 4 | 5 | 6 | 7 | 8 |
| (A) | | Polyacetal resin    (pts. by wt.) | 100 | 95 | 90 | 95 | 90 | 95 | 95 | 95 |
| (B) | | PE-g-PMMA    ( " ) | — | — | — | — | — | — | — | — |
| | | PE-g-AN/S    ( " ) | — | — | — | — | — | — | — | — |
| | | PE-g-PEO    ( " ) | — | — | — | — | — | — | — | — |
| | | E/GMA-g-PMMA ( " ) | — | — | — | — | — | — | — | — |
| | | E/GMA-g-AN/S ( " ) | — | — | — | — | — | — | — | — |
| (a) | | PE    ( " ) | — | 5 | 10 | — | — | — | — | — |
| | | E/GMA    ( " ) | — | — | — | 5 | 10 | — | — | — |
| (b) | | PMMA    ( " ) | — | — | — | — | — | 5 | — | — |
| | | AN/S    ( " ) | — | — | — | — | — | — | 5 | — |
| | | PEO    ( " ) | — | — | — | — | — | — | — | 5 |
| Evaluation | extrudability | | 5 | 5 | 5 | 5 | 5 | 5 | 5 | 4 |
| | surface condition of molding | | 2 | 2 | 1 | 3 | 3 | 3 | 3 | 4 |
| | sliding noise (squeak) | | 1 | 1 | 2 | 1 | 1 | 1 | 1 | 1 |
| | friction/ abrasion character | coefficient of dynamic friction | 0.30 | 0.23 | 0.23 | 0.23 | 0.23 | 0.28 | 0.33 | 0.25 |
| | | specific abrasion wear — composition of the present invention ($mm^3kg\cdot km$) | $20\times10^{-2}$ | $10\times10^{-2}$ | $12\times10^{-2}$ | $11\times10^{-2}$ | $12\times10^{-2}$ | $13\times10^{-2}$ | $25\times10^{-2}$ | $13\times10^{-2}$ |
| | | specific abrasion wear — mating material ($mm^3kg\cdot km$) | $21\times10^{-2}$ | $12\times10^{-2}$ | $13\times10^{-2}$ | $13\times10^{-2}$ | $15\times10^{-2}$ | $14\times10^{-2}$ | $25\times10^{-2}$ | $12\times10^{-2}$ |

EP 0 354 802 B1

Table 2

| | | | | Example | | | | | | | | | | |
|---|---|---|---|---|---|---|---|---|---|---|---|---|---|---|
| | | | | 9 | 10 | 11 | 12 | 13 | 14 | 15 | 16 | 17 | 18 | 19 |
| (A) | Polyacetal resin | (pts. by wt.) | | 94 | 92 | 94 | 94 | 94 | 94 | 94 | 94 | 94 | 94 | 94 |
| (B) | PE-g-PMMA | ( " ) | | 5 | 5 | 5 | 5 | 5 | — | — | — | — | — | — |
| | PE-g-AN/S | ( " ) | | — | — | — | — | — | 5 | — | — | — | — | — |
| | PE-g-PEO | ( " ) | | — | — | — | — | — | — | 5 | 5 | — | — | — |
| | E/GMA-g-PMMA | ( " ) | | — | — | — | — | — | — | — | — | 5 | 5 | — |
| | E/GMA-g-AN/S | ( " ) | | — | — | — | — | — | — | — | — | — | — | 5 |
| (a) | PE | ( " ) | | — | — | — | — | — | — | — | — | — | — | — |
| | E/GMA | ( " ) | | — | — | — | — | — | — | — | — | — | — | — |
| (b) | PMMA | ( " ) | | — | — | — | — | — | — | — | — | — | — | — |
| | AN/S | ( " ) | | — | — | — | — | — | — | — | — | — | — | — |
| | PEO | ( " ) | | — | — | — | — | — | — | — | — | — | — | — |
| (C) | Paraffinic mineral oil | ( " ) | | 1 | 3 | — | — | — | 1 | 1 | — | 1 | — | 1 |
| | Stearyl stearate | ( " ) | | — | — | 1 | — | — | — | — | 1 | — | 1 | — |
| | Pentaerythritol tetrastearate | ( " ) | | — | — | — | 1 | — | — | — | — | — | — | — |
| | Silicone oil | ( " ) | | — | — | — | — | 1 | — | — | — | — | — | — |
| Evalua-tion | extrudability | | | 5 | 5 | 5 | 5 | 5 | 5 | 5 | 5 | 5 | 5 | 5 |
| | surface condition of molding | | | 5 | 4 | 5 | 5 | 5 | 5 | 5 | 5 | 5 | 5 | 5 |
| | sliding noise (squeak) | | | 5 | 5 | 5 | 5 | 5 | 5 | 5 | 5 | 5 | 5 | 5 |
| | friction/abrasion character | | coefficient of dynamic friction | 0.20 | 0.18 | 0.18 | 0.18 | 0.17 | 0.18 | 0.17 | 0.17 | 0.17 | 0.17 | 0.18 |
| | | specific abrasion wear | composition of the present invention (mm³kg·km) | $3 \times 10^{-3}$ | $2 \times 10^{-3}$ | $3 \times 10^{-3}$ | $3 \times 10^{-3}$ | $3 \times 10^{-3}$ | $3 \times 10^{-3}$ | $3 \times 10^{-3}$ | $2 \times 10^{-3}$ | $4 \times 10^{-3}$ | $3 \times 10^{-3}$ | $4 \times 10^{-3}$ |
| | | | mating material (mm³kg·km) | $3 \times 10^{-2}$ | $3 \times 10^{-2}$ | $4 \times 10^{-2}$ | $4 \times 10^{-2}$ | $3 \times 10^{-2}$ | $4 \times 10^{-3}$ | $3 \times 10^{-2}$ | $3 \times 10^{-2}$ | $5 \times 10^{-2}$ | $4 \times 10^{-2}$ | $3 \times 10^{-2}$ |

EP 0 354 802 B1

Table 2 (continued)

|  |  |  |  | Comparative Example | | | | | | | |
|---|---|---|---|---|---|---|---|---|---|---|---|
|  |  |  |  | 9 | 10 | 11 | 12 | 13 | 14 | 15 | 16 |
| (A) |  | Polyacetal resin | (pts. by wt.) | 94 | 92 | 94 | 94 | 94 | 94 | 94 | 94 |
| (B) |  | PE-g-PMMA | ( ″ ) | — | — | — | — | — | — | — | — |
|  |  | PE-g-AN/S | ( ″ ) | — | — | — | — | — | — | — | — |
|  |  | PE-g-PEO | ( ″ ) | — | — | — | — | — | — | — | — |
|  |  | E/GMA-g-PMMA | ( ″ ) | — | — | — | — | — | — | — | — |
|  |  | E/GMA-g-AN/S | ( ″ ) | — | — | — | — | — | — | — | — |
| (a) |  | PE | ( ″ ) | 5 | 5 | 5 | 5 | 5 | — | — | — |
|  |  | E/GMA | ( ″ ) | — | — | — | — | — | — | — | — |
| (b) |  | PMMA | ( ″ ) | — | — | — | — | — | 5 | 5 | 5 |
|  |  | AN/S | ( ″ ) | — | — | — | — | — | — | — | — |
|  |  | PEO | ( ″ ) | — | — | — | — | — | — | — | — |
| (C) |  | Paraffinic mineral oil | ( ″ ) | 1 | 3 | — | — | — | 1 | — | 1 |
|  |  | Stearyl stearate | ( ″ ) | — | — | 1 | — | — | — | 1 | — |
|  |  | Pentaerythritol tetrastearate | ( ″ ) | — | — | — | 1 | — | — | — | — |
|  |  | Silicone oil | ( ″ ) | — | — | — | — | 1 | — | — | 1 |
| Evalua-tion |  | extrudability | | 2 | 1 | 2 | 2 | 3 | 3 | 2 | 2 |
|  |  | surface condition of molding | | 1 | 1 | 1 | 1 | 1 | 2 | 2 | 2 |
|  |  | sliding noise (squeak) | | 2 | 3 | 2 | 2 | 2 | 1 | 1 | 1 |
|  | friction/ abrasion character | coefficient of dynamic friction | | 0.22 | 0.21 | 0.21 | 0.20 | 0.22 | 0.27 | 0.25 | 0.26 |
|  |  | specific abrasion wear | composition of the present invention (mm³kg·km) | $8 \times 10^{-2}$ | $7 \times 10^{-2}$ | $8 \times 10^{-2}$ | $8 \times 10^{-2}$ | $9 \times 10^{-2}$ | $11 \times 10^{-2}$ | $10 \times 10^{-2}$ | $11 \times 10^{-2}$ |
|  |  |  | mating material (mm³kg·km) | $10 \times 10^{-2}$ | $9 \times 10^{-2}$ | $9 \times 10^{-2}$ | $8 \times 10^{-2}$ | $9 \times 10^{-2}$ | $12 \times 10^{-2}$ | $12 \times 10^{-2}$ | $11 \times 10^{-2}$ |

Table 2  (continued)

| | | | Comparative Example | | | | | | | |
|---|---|---|---|---|---|---|---|---|---|---|
| | | | 17 | 18 | 19 | 20 | 21 | 22 | 23 | 24 |
| (A) | | Polyacetal resin (pts. by wt.) | 94 | 94 | 94 | 94 | 99 | 99 | 99 | 99 |
| (B) | | PE−g−PMMA ( ″ ) | — | — | — | — | — | — | — | — |
| | | PE−g−AN/S ( ″ ) | — | — | — | — | — | — | — | — |
| | | PE−g−PEO ( ″ ) | — | — | — | — | — | — | — | — |
| | | E/GMA−g−PMMA ( ″ ) | — | — | — | — | — | — | — | — |
| | | E/GMA−g−AN/S ( ″ ) | — | — | — | — | — | — | — | — |
| (a) | | PE ( ″ ) | — | — | — | — | — | — | — | — |
| | | E/GMA ( ″ ) | 5 | 5 | — | — | — | — | — | — |
| (b) | | PMMA ( ″ ) | — | — | — | — | — | — | — | — |
| | | AN/S ( ″ ) | — | — | 5 | — | — | — | — | — |
| | | PEO ( ″ ) | — | — | — | 5 | — | — | — | — |
| (C) | | Paraffinic mineral oil ( ″ ) | 1 | — | 1 | — | 1 | — | — | — |
| | | Stearyl stearate ( ″ ) | — | 1 | — | 1 | — | 1 | — | — |
| | | Pentaerythritol tetrastearate ( ″ ) | — | — | — | — | — | — | 1 | — |
| | | Silicone oil ( ″ ) | — | — | — | — | — | — | — | 1 |
| Evaluation | extrudability | | 3 | 3 | 3 | 1 | 2 | 1 | 1 | 1 |
| | surface condition of molding | | 2 | 2 | 2 | failed in molding | 4 | failed in molding | | 4 |
| | sliding noise (squeak) | | 2 | 2 | 1 | | 1 | | | 1 |
| | friction/ abrasion character | coefficient of dynamic friction | 0.22 | 0.21 | 0.30 | | 0.21 | | | 0.21 |
| | | specific abrasion wear | composition of the present invention $(mm^3 kg \cdot km)$ | $10 \times 10^{-3}$ | $9 \times 10^{-3}$ | $21 \times 10^{-3}$ | | $8 \times 10^{-3}$ | | | $10 \times 10^{-3}$ |
| | | | mating material $(mm^3 kg \cdot km)$ | $10 \times 10^{-3}$ | $10 \times 10^{-3}$ | $20 \times 10^{-3}$ | | $9 \times 10^{-3}$ | | | $9 \times 10^{-3}$ |

EP 0 354 802 B1

Table 2

| | | | invention | | comparative example | |
|---|---|---|---|---|---|---|
| | | | 20 | 21 | 25 | 26 |
| (A) | Polyacetal resin | (pts. by wt.) | 94 | 94 | 94 | 94 |
| (B) | PE-g-PMMA | ( " ) | - | - | - | - |
| | PE-g-AN/S | ( " ) | 5 | 5 | — | — |
| | PE-g-PEO | ( " ) | — | — | — | — |
| | E/GMA-g-PMMA | ( " ) | — | — | — | — |
| | E/GMA-g-AN/S | ( " ) | — | — | — | — |
| (a) | PE | ( " ) | — | — | 5 | 5 |
| | E/GMA | ( " ) | — | — | — | — |
| (b) | PMMA | ( " ) | — | — | — | — |
| | AN/S | ( " ) | — | — | — | — |
| | PEO | ( " ) | — | — | — | — |
| (C) | Paraffinic mineral oil | ( " ) | - | - | — | — |
| | Stearyl stearate | ( " ) | — | — | - | — |
| | Pentaerythritol tetrastearate | ( " ) | — | — | — | - |
| | Silicone oil | ( " ) | — | — | — | — |
| | glycerin monostearate | ( " ) | 1 | - | 1 | - |
| | behenyl behenate | ( " ) | - | 1 | - | 1 |
| Evaluation | extrudability | | 5 | 5 | 3 | 3 |
| | surface condition of molding | | 5 | 5 | 1 | 1 |
| | sliding noise (squeak) | | 5 | 5 | 2 | 2 |
| | friction/abrasion character | coefficient of dynamic friction | 0.17 | 0.16 | 0.20 | 0.21 |
| | | specific abrasion wear — composition of the present invention (mm³/kg·km) | $2\times10^{-2}$ | $2\times10^{-2}$ | $8\times10^{-3}$ | $8\times10^{-3}$ |
| | | mating material (mm³/kg·km) | $3\times10^{-2}$ | $3\times10^{-2}$ | $8\times10^{-3}$ | $9\times10^{-3}$ |

## Claims

1. A polyacetal resin composition comprising:
   (A) 100 parts by weight of a polyacetal resin and
   (B) 0.5 to 40 parts by weight of a graft copolymer which comprises (a) an olefinic polymer chemically bonded to (b) one or more of vinyl polymers or ether polymers selected from the group consisting of polymethyl methacrylate, acrylonitrile/styrene copolymer and polyethylene oxide to form a branched or crosslinked structure.

2. A polyacetal resin composition according to Claim 1, wherein the olefinic polymer (a) constituting the component (B) is a polyethylene or a copolymer of ethylene with a glycidyl ester of an $\alpha, \beta$-unsaturated acid.

3. A polyacetal resin composition according to Claim 1, in which said graft copolymer (B) is a graft copolymer produced by grafting polymethylmethacrylate or a copolymer of acrylonitrile and styrene on polyethylene.

4. A polyacetal resin composition according to any preceding Claim, in which the weight ratio of (a) to (b) in the graft copolymer (B) is in the range 60:40 to 40:60.

**5.** A polyacetal resin composition according to any preceding Claim, in which the amount of the graft copolymer (B) is 1 to 30 parts by weight.

**6.** A polyacetal resin composition according to any preceding Claim, which further comprises 0.1 to 20 parts by weight, based on 100 parts by weight of (A) and (B), of a lubricant.

**7.** A polyacetal resin composition according to Claim 6, 7, in which said lubricant is selected from an aliphatic acid, an alcohol and an aliphatic acid ester and has at least 12 carbon atoms.

**8.** A polyacetal resin composition according to Claim 7, 8, in which the lubricant is an aliphatic ester having at least 20 carbon atoms.

**9.** A sliding member comprising the composition as defined in any preceeding Claim.

**Patentansprüche**

**1.** Polyacetal-Harzzusammensetzung, umfassend:
(A) 100 Gewichtsteile eines Polyacetal-Harzes und
(B) 0,5 bis 40 Gewichtsteile eines Propf-Copolymers, umfassend (a) ein olefinisches Polymer, das chemisch gebunden ist an (b) ein oder mehrere Vinyl-Polymere oder Ether-Polymere, ausgewählt aus der Gruppe bestehend aus Polymethylmethacrylat, Acrylnitril/Styrol-Copolymer und Polyethylenoxid, um eine verzweigte oder vernetzte Struktur zu bilden.

**2.** Polyacetal-Harzzusammensetzung nach Anspruch 1, wobei es sich bei dem olefinischen Polymer (a), aus dem die Komponente (B) aufgebaut ist, um ein Polyethylen oder ein Copolymer von Ethylen mit einem Glycidylester einer $\alpha,\beta$-ungesättigten Säure handelt.

**3.** Polyacetal-Harzzusammensetzung nach Anspruch 1, wobei das Pfropf-Copolymer (B) ein Pfropf-Copolymer ist, das hergestellt wird durch Pfropfen von Polymethylmethacrylat oder eines Copolymers von Acrylnitril und Styrol auf Polyethylen.

**4.** Polyacetal-Harzzusammensetzung nach irgendeinem der vorstehenden Ansprüche, worin das Gewichtsverhältnis von (a) zu (b) im Pfropf-Copolymer (B) im Bereich von 60:40 bis 40:60 liegt.

**5.** Polyacetal-Harzzusammensetzung nach irgendeinem der vorstehenden Ansprüche, worin die Menge an Pfropf-Copolymer (B) 1 bis 30 Gewichtsteile ist.

**6.** Polyacetal-Harzzusammensetzung nach irgendeinem der vorstehenden Ansprüche, die weiterhin 0,1 bis 20 Gewichtsteile, bezogen auf 100 Gewichtsteile von (A) und (B), eine Gleitmittels umfaßt.

**7.** Polyacetal-Harzzusammensetzung nach Anspruch 6, wobei das Gleitmittel ausgewählt ist aus einer aliphatischen Säure, einem Alkohol und einem aliphatischen Säureester und wenigstens 12 Kohlenstoff-Atome aufweist.

**8.** Polyacetal-Harzzusammensetzung nach Anspruch 7, wobei das Gleitmittel ein aliphatischer Ester mit wenigstens 20 Kohlenstoff-Atomen ist.

**9.** Schiebeteil, umfassend die Zusammensetzung nach irgendeinem der vorstehenden Ansprüche.

**Revendications**

**1.** Une composition de résine polyacétal comprenant :
(A) 100 parties en poids d'une résine polyacétal et
(B) 0,5 à 40 parties en poids d'un copolymère greffé qui comprend (a) un polymère oléfinique chimiquement lié à (b) un ou plusieurs polymères vinyliques ou polyéthers choisis dans le groupe formé par un polyméthacrylate de méthyle, un copolymère acrylonitrile/styrène et un poly(oxyde d'éthylène) pour former une structure ramifiée ou réticulée.

2. Une composition de résine polyacétal selon la revendication 1, dans laquelle le polymère oléfinique (a) constituant le composant (B) est un polyéthylène ou un copolymère d'éthylène avec un ester de glycidyle d'un acide insaturé en $\alpha,\beta$.

3. Une composition de résine polyacétal selon la revendication 1, dans laquelle ledit copolymère greffé (B) est un copolymère greffé produit en greffant du polyméthacrylate de méthyle ou un copolymère d'acrylonitrile et de styrène sur du polyéthylène.

4. Une composition de résine polyacétal selon l'une quelconque des revendications précédentes, dans laquelle le rapport en poids de (a) à (b) dans le copolymère greffé (B) est compris dans l'intervalle de 60:40 à 40:60.

5. Une composition de résine polyacétal selon l'une quelconque des revendications précédentes, dans laquelle la quantité du copolymère greffé (B) est de 1 à 30 parties en poids.

6. Une composition de résine polyacétal selon l'une quelconque des revendications précédentes, qui contient de plus 0,1 à 20 parties en poids, pour 100 parties en poids de (A) et (B), d'un lubrifiant.

7. Une composition de résine polyacétal selon la revendication 6, dans laquelle ledit lubrifiant est choisi parmi un acide aliphatique, un alcool et un ester d'acide aliphatique et compte au moins 12 atomes de carbone.

8. Une composition de résine polyacétal selon la revendication 7, dans laquelle le lubrifiant est un ester aliphatique ayant au moins 20 atomes de carbone.

9. Un élément glissant comprenant la composition telle que définie dans l'une quelconque des revendications précédentes.

14